Europäisches Patentamt

European Patent Office

Office européen des brevets

(11) Publication number: **0 026 981**
**B1**

(12) **EUROPEAN PATENT SPECIFICATION**

(45) Date of publication of patent specification: **28.11.84**

(21) Application number: **80303084.0**

(22) Date of filing: **03.09.80**

(51) Int. Cl.³: **G 01 N 15/08**, G 01 N 21/35,
G 01 M 3/20

(54) Method of measuring moisture permeation.

(30) Priority: **10.09.79 JP 115942/79**

(43) Date of publication of application:
**15.04.81 Bulletin 81/15**

(45) Publication of the grant of the patent:
**28.11.84 Bulletin 84/48**

(84) Designated Contracting States:
**DE FR GB NL**

(56) References cited:
**DE-A-2 318 032**
**US-A-3 448 268**
**US-A-3 548 633**
**US-A-4 158 960**

(73) Proprietor: **FUJITSU LIMITED**
**1015, Kamikodanaka Nakahara-ku**
**Kawasaki-shi Kanagawa 211 (JP)**

(72) Inventor: **Takasaki, Kanetake**
**26-10, Ohmorikita 1-chome**
**Ohta-ku Tokyo 143 (JP)**
Inventor: **Takagi, Mikio**
**6-20-3, Nagao**
**Tama-ku, Kawasaki-shi Kanagawa 213 (JP)**
Inventor: **Maeda, Mamoru**
**2-5-6-403, Toyogaoka**
**Tama-shi, Tokyo 192-02 (JP)**

(74) Representative: **Abbott, Leonard Charles et al**
**GILL JENNINGS & EVERY 53-64 Chancery Lane**
**London WC2A 1HN (GB)**

Courier Press, Leamington Spa, England.

## Description

This invention relates to a method of measuring moisture permeation through a protective film. More particularly, it relates to an improved method of measuring moisture permeation through a surface protective film formed, for example, on an integrated circuit, by which method the moisture permeation can be measured within a short period of time and with a high reliability.

In order to improve the reliability of an integrated circuit, it is necessary to prevent moisture absorption in active regions of the circuit. For this purpose, a waterproofing method has been widely adopted in which the surface of an integrated circuit is protected by a water-resistant protecting film. Such protecting film is required to have a good water resistance, that is, a low water permeability.

A pressure cooker test method, which is usually abbreviated as "P.C.T. method", has heretofore been mainly used for testing the water permeability of various materials. In this P.C.T. method a specimen is maintained in steam at a temperature of 120°C and a pressure of 2 atmospheres to effect humidification. Therefore, this method can be regarded as one of the accelerated test methods. However, in using this method about 100 hours are necessary for attaining the desired degree of moisture absorption, and hence, a long time is required for completion of the test. Furthermore, since the degree of moisture absorption in the specimen is determined on the basis of examination of changes of the specimen by visual inspection through a microscope, it is difficult to evaluate the degree of moisture absorption precisely, and therefore, it is very difficult to recognize the difference in water permeability between specimens.

It also has been proposed in the Fall Meeting of THE ELECTROCHEMICAL SOCIETY, INC., Extended Abstracts of BATTERY DIVISION, Abstract No. 268 (October, 1972), that moisture permeation through a protective film is measured by a testing method wherein a specimen is placed in a humidity furnace and maintained therein at a temperature of, for example, from 200° to 500°C, and then the moisture-absorbed specimen is subjected to infra-red spectrophotometry. However, this proposed method also needs a substantially long period of time for attaining the desired degree of moisture absorption.

It is an object of the present invention to provide an improved method for measuring moisture permeation through a surface protective film, by which method the moisture permeability of the surface protective film can be evaluated within a short period of time and with a high reliability.

In accordance with the present invention, there is provided a method of measuring moisture permeation through a protective film, wherein a specimen, comprising a substrate which is impermeable to water and transparent to infra-red rays, a water-absorbent layer formed on the substrate, the water-absorbent layer being composed of a material which exhibits an infra-red absorption spectrum which varies depending upon the absorption of moisture, and the protective film, the moisture permeation through which is to be measured, being formed on the water-absorbent layer so that the protective film and the substrate form a complete cover for the water-absorbent layer, is exposed to steam maintained at an elevated temperature and after said exposure, said specimen is investigated by infra-red spectrophotometry, whereby the moisture permeation through the surface protective film is determined, characterised in that the exposure of the specimen to steam is carried out at a temperature of from about 320°C to about 1000°C and at a pressure of from about $1.013 \cdot 10^6$ to about $2.026 \cdot 10^6$ Pascal (about 10 to about 20 atmospheres) to accelerate the moisture absorption.

An embodiment of the invention will now be described, by way of example, with reference to the accompanying drawings, in which:

Fig. 1 is a sectional view illustrating the structure of a specimen to be tested according to the water permeation test method of the present invention;

Fig. 2 is a sectional view illustrating one method of carrying out the step of humidifying the specimen in the water permeation test method; and

Fig. 3 is a diagram illustrating changes in the infra-red absorption spectrum due to the moisture absorption of phospho-silicate glass.

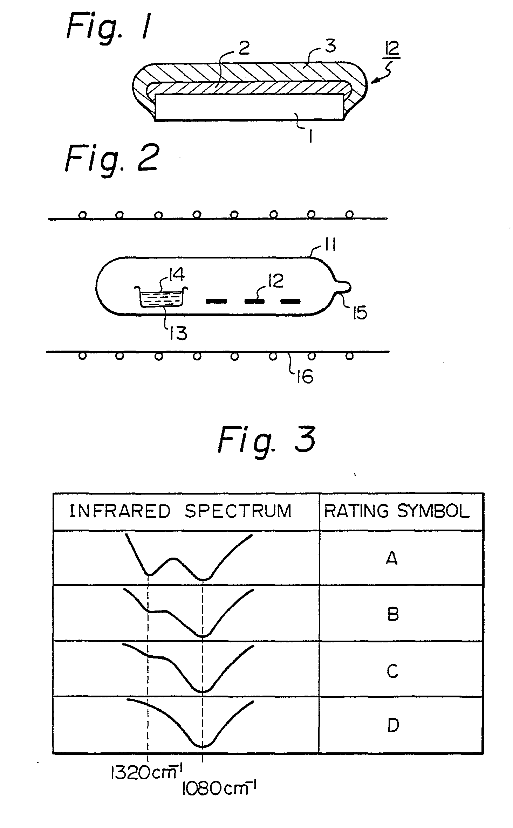

Referring to Fig. 1, a specimen 12 to be tested comprises a substrate 1, a water-absorbent layer 2 formed on the substrate 1, and a covering 3 of a protective film, the moisture permeation through which is to be measured, formed on the water-absorbent layer 2 so that the water-absorbent layer 2 is completely covered by the protective film covering 3 and by the substrate 1. The substrate 1 is made of a material which is impermeable to water and transparent to infra-red rays. For example, the substrate 1 may be made of a two-surface-polished silicon plate having a specific resistivity of at least 100 ohm-cm and a thickness of about 1 mm. The water absorbent layer 2 is made of a material which exhibits an infra-red absorption spectrum which varies depending upon the absorption of moisture and which includes, for example, phospho-silicate glass (PSG) and boro-silicate glass (BSG). The thickness of the water-absorbent layer 2 may be varied, usually in the range of from about 0.3 microns (3,000 angstroms) to 3 microns. For example, the water-absorbent layer 2 may be composed of a PSG layer having a thickness of about one micron, which has been formed on the substrate 1 by a chemical vapor deposition (CVD) method. The protective film covering 3 to be tested may be composed of, for example, silicon oxynitride (SiON), silicon dioxide $(SiO_2)$, silicon nitride (SiN) and thermal resistant synthetic resins, such as polyimides and organopolysiloxanes. The thickness of the protective film covering 3 may be varied, preferably in the range of from about $5 \cdot 10^{-3}$ microns (50 angstroms) to about twenty microns. One typical example of the protective film coverings is a SiON (silicon oxynitride) film having a thickness of about $5 \cdot 10^{-2}$ microns (500 angstroms), which has been formed by a plasma CVD method.

Referring to Fig. 2, an optional number of specimens 12, each having the above-mentioned laminate structure, are placed within a quartz capsule 11. A heat-resistant vessel 13 charged with an appropriate amount of water 14 is also placed within the quartz capsule 11. After the specimens 12 and the water-charged vessel 13 are placed in the quartz capsule 11, one end of the quartz capsule 11 is sealed in vacuo. In Fig. 2, this sealed portion is represented by reference numeral 15. The quartz capsule 11 sealed in vacuo is placed in a high temperature oven, such as a diffusion oven 16, to heat the specimens 12. Heating is carried out so that the quartz capsule 11 is maintained at, for example, 320°C. The amount of water in the vessel 13 is adjusted so that, at this heating step, water in the vessel 13 is evaporated and the quartz capsule 11 is filled with steam maintained, for example, at 10 atmospheres.

When this humidifying method is adopted, in case of, for example, the specimen illustrated in Fig. 1, steam permeates into the water-absorbent layer 2 through the protective film 3, and the water-absorbent layer 2 can be humidified to the desired extent in about 8 hours.

In general, the temperature of the specimens and the pressure thereof may be selected in the ranges of from about 320°C to about 1,000°C and from about 10 to 20 atmospheres. The period of time for which the specimens are exposed to steam varies depending upon the temperature and pressure of the steam, and the thickness of the surface protective film to be tested.

For examining the degree of moisture absorption in the humidified specimens, each specimen 12 is taken out from the quartz capsule 11, and then, investigated by infra-red spectrophotometry. If an appreciable amount of water is absorbed into the water-absorbent layer 2 through the protective film 3, the P=O bond in PSG disappears, and hence, the infra-red absorption band at 1320 $cm^{-1}$ inherent to the P=O bond is not observed. It is well known that P=O bond in PSG is caused to disappear when PSG absorbs moisture, and absorption of infra-red rays is changed owing to this disappearance of the P=O bond. In order to accomplish the above-mentioned test, it is indispensable that the substrate 1 should be water-impermeable and transparent to infra-red rays. The above-mentioned silicon substrate is suitable for this test because it satisfies the above requirements very well.

Fig. 3 is a diagram illustrating changes of the infra-red absorption spectrum owing to moisture absorption of PSG. In Fig. 3, the uppermost curve shows the state where no moisture absorption has been caused at all. An absorption band inherent to the P=O bond is clearly observed at 1320 $cm^{-1}$, and the absorption band inherent to the Si—O bond appears at 1080 $cm^{-1}$. This state is indicated by a rating symbol "A". The second curve shows the state where slight moisture absorption has taken place. It is seen that the absorption band at 1320 $cm^{-1}$, inherent to the P=O bond, is slightly reduced as compared with the uppermost curve. This state is indicated by a rating symbol "B". The third curve shows the state where a considerable quantity of moisture has been absorbed. In this state, the absorption band inherent to the P=O bond is observed only slightly at 1320 $cm^{-1}$. This state is indicated by rating symbol "C". The lowermost curve shows the state of complete moisture absorption, wherein the absorption band inherent to the P=O bond is not observed at all. This state is indicated by rating symbol "D".

The invention will be further illustrated by the following example.

### Example

A phospho-silicate glass layer (i.e., a water-absorbent layer) having a thickness of about one micron was formed on a two-surface-polished silicon plate having a thickness of about one mm, by a CVD procedure. Then, a silicon oxynitride (SiON) protective film having a thickness of about 500 microns was formed on the water-absorbent phospho-silicate glass layer by a plasma CVD procedure, to prepare specimens having a laminate structure similar to that illustrated in Fig. 1. The plasma CVD was conducted at a growth temperature of 350°C, under a total pressure of one torr, with a high frequency electric power of 10 W, by using a mixed gas comprising for the various specimens selected proportions of $SiH_4$ (silane), $NH_3$ (ammonia) and $N_2O$ (nitrous oxide), diluted with Ar (argon).

The composition of the SiON protective film formed was varied by changing the value of "x", which indicates the ratio of $N_2O/(NH_3 + N_2O)$, and the influences of the value "x" on the water permeability were examined. The obtained results are shown in Table I, below, using rating symbols given in Fig. 3.

The results shown in Table I clearly demonstrate that the water permeability of the SiON protective film greatly varies depending upon the composition of the protective film. This dependency is especially conspicuous under high-temperature and high-pressure conditions

## TABLE I

| Run No. | Heating and Humidifying Conditions | | Value "X" | | | | |
|---|---|---|---|---|---|---|---|
| | Temperature (°C) | Pressure (atms.) | 0 | .10 | .50 | .90 | 1.00 |
| 1* | 320 | 1 | A | A | A | B | B |
| 2 | 120 | 2 | A | A | A | B | B |
| 3 | 320 | 2 | A | A | A | C | C |
| 4 | 320 | 10 | A | A | C | D | D |
| 5 | 320 | 20 | A | C | D | D | D |

* Comparative Example.

(320°C, 10 and 20 atmospheres). In contrast, under conditions adopted in the conventional P.C.T. method, the difference of the water permeability is not manifested so prominently as mentioned above.

The results in Run No. 2 are similar to those in Run No. 1 (Comparative Example). It is to be noted, however, that the procedure employed in Run No. 2 is advantageous over that employed in Run No. 1 because the low temperature of 120°C has no adverse effect on semiconductor devices.

In Table I, in the case of x = 0, the protective film is of $Si_3N_4$ (silicon nitride), and in case of x = 1.0, the protective film is of $SiO_2$ (silicon dioxide). Accordingly, the results shown in Table I teach that as the composition of the SiON protective film is brought close to $Si_3N_4$, the water permeability is reduced, whereas as the composition of the SiON protective film is brought close to $SiO_2$, the water permeability is increased.

As pointed out hereinbefore, according to the water permeation test method of the present invention, the water permeability of the protecting film can be evaluated definitely in a short time and with a high reliability, and the test procedures are very simple.

The moisture permeation measuring method of the present invention can be advantageously utilized for judging water resistance of a plurality of semiconductor devices, each of which has (i) a substrate which is impermeable to water and transparent to infra-red rays, such as a silicon substrate, (ii) a water-absorbent layer formed on the substrate, said water-absorbent layer being composed of a material which exhibits an infra-red absorption spectrum varying depending upon the absorption of moisture, such as phospho-silicate glass, and (iii) a protective film made of, for example, a polyimide or silicon oxynitride (SiON), said protective film being formed on the water-absorbent layer so that the water-absorbent layer is completely covered with the protective film and with the substrate. The judgment of water resistance of a plurality of such semiconductor devices is effected by the steps of: (1) first, one or more samples to be tested are taken from the semiconductor devices; (2) second, the sample or samples are exposed to steam maintained at a temperature of from about 320°C to about 1000°C and a pressure of from about 10 to about 20 atmospheres to accelerate the moisture absorption, and then, (3) the steam-exposed sample or samples are investigated by infra-red spectrophotometry, whereby the moisture permeation through the respective protective film or films is determined according to the infra-red absorption spectrum of the water-absorbent layer.

## Claims

1. A method of measuring moisture permeation through a protective film, wherein a specimen, comprising a substrate (1) which is impermeable to water and transparent to infra-red rays, a water-absorbent layer (2) formed on the substrate, the water-absorbent layer being composed of a material which exhibits an infra-red absorption spectrum which varies depending upon the absorption of moisture, and the protective film (3), the moisture permeation through which is to be measured, being formed on the water-absorbent layer so that the protective film and the substrate form a complete cover for the water-absorbent layer, is exposed to steam maintained at an elevated temperature and after said exposure, said specimen is investigated by infra-red spectrophotometry, whereby the moisture permeation through the surface protective film is determined, characterised in that the exposure of the specimen to steam is carried out at a temperature of from about 320°C to about 1000°C and at a pressure of from about $1.013 \cdot 10^6$ to about $2.026 \cdot 10^6$ Pascal (about 10 to about 20 atmospheres) to accelerate the moisture absorption.

2. A method according to Claim 1, characterised in that the water-absorbent layer (2) is composed of phosphosilicate glass.

3. A method according to Claim 1 or Claim 2, characterised in that the water-absorbent layer (2) has a thickness of from about 0.3 micron (3,000 angstroms) to about 3 microns.

4. A method according to any preceding claim, characterised in that the substrate (1) is composed of silicon.

5. A method according to any preceding claim, characterised in that the protective film (3) is composed of at least one substance selected from the group comprising silicon oxynitride, silicon nitride, silicon dioxide, a polyimide and an organo-polysiloxane.

6. A method according to any preceding claim, characterised in that the protective film (3) has a thickness of from about $5 \times 10^{-3}$ microns (50 angstroms) to about 20 microns.

## Patentansprüche

1. Verfahren zum Messen des Eindringens von Feuchtigkeit durch einen Schutzfilm, bei welchem eine Probe, die ein Substrat (1), das wasserundurchlässig und für infrarote Strahlen transparent ist, eine Wasser absorbierende Schicht (2), die auf dem Substrat gebildet ist und aus einem Material besteht, das ein infrarotes Absorbtionsspektrum hat, welches sich in Abhängigkeit von der Absorption von Feuchtigkeit ändert, und einen Schutzfilm (3) umfaßt, dessen Feuchtigkeitsdurchlässigkeit gemessen werden soll und der auf der Wasser absorbierenden Schicht so gebildet ist, daß der Schutzfilm und das Substrat eine vollständige Abdeckung der absorbierenden Schicht bilden, dem Dampf, der auf einer erhöhten Temperatur gehalten wird, ausgesetzt wird und die Probe danach mit Hilfe von Infrarot-Spektrophotometrie untersucht wird, wodurch die Feuchtigkeitsdurchlässigkeit durch den Oberflächenschutzfilm bestimmt wird, dadurch gekennzeichnet, daß die Probe dem Dampf bei einer Temperatur von etwa 320°C bis etwa 1000°C und bei einem Druck von etwa $1,013 \times 10^6$ bis etwa $2,026 \times 10^6$ Pascal (etwa 10 bis 20 Atmosphären) ausgesetzt wird, um die Absorption von Feuchtigkeit zu beschleunigen.

2. Verfahren nach Anspruch 1, dadurch gekennzeichnet, daß die Wasser absorbierende Schicht (2) auf Phosphorsilikatglas besteht.

3. Verfahren nach Anspruch 1 oder 2, dadurch gekennzeichnet, daß die Wasser absorbierende Schicht (2) eine Dicke von etwa 0,3 $\mu m$ (3000 Å) bis 3 $\mu m$ hat.

4. Verfahren nach einem der vorhergehenden Ansprüche, dadurch gekennzeichnet, daß das Substrat (1) aus Silizium besteht.

5. Verfahren nach einem der vorhergehenden Ansprüche, dadurch gekennzeichnet, daß der Schutzfilm (3) aus wenigstens einer Substanz zusammengesetzt ist, die aus der Gruppe ausgewählt ist, die Siliziumoxynitrid, Siliziumnitrid, Siliziumdioxid, ein Polyimide und ein Organo-Polysiloxan umfaßt.

6. Verfahren nach einem der vorhergehenden Ansprüche, dadurch gekennzeichnet, daß der Schutzfilm (3) eine Dicke von etwa $5 \times 10^{-3}$ Mikron (50 Å) bis etwa 20 Mikron hat.

## Revendications

1. Un procédé de mesure de l'infiltration de l'humidité à travers un film protecteur, dans lequel on expose à la vapeur maintenue à une température élevée un échantillon consistant en un substrat (1) qui est imperméable à l'eau et transparent aux rayons infrarouges, une couche absorbant l'eau (2) formée sur le substrat, la couche absorbant l'eau étant composée d'une substance qui présente un spectre d'absorption infrarouge variant selon l'absorption de l'humidité, et le film protecteur (3), dans lequel on doit mesurer l'infiltration de l'humidité, formé sur la couche absorbant l'eau de telle sorte que le film protecteur et le substrat recouvrent complètement la couche absorbant l'eau, et après ladite exposition, on étudie ledit échantillon par spectrophotométrie infrarouge, de manière à déterminer l'infiltration de l'humidité à travers le film protecteur de surface, ledit procédé étant caractérisé en ce que l'exposition de l'échantillon à la vapeur est effectuée à une température d'environ 320°C à environ 1000°C et sous une pression d'environ $1,013 \cdot 10^6$ à environ $2,026 \cdot 10^6$ Pascal (environ 10 à 20 atmosphères) pour accélérer l'absorption de l'humidité.

2. Un procédé selon la revendication 1, caractérisé en ce que la couche absorbant l'eau (2) est composée d'un verre au phosphosilicate.

3. Un procédé selon la revendication 1 ou 2, caractérisé en ce que la couche absorbant l'eau (2) a une épaisseur d'environ 0,3 $\mu m$ (3000 Å) à environ 3 $\mu m$.

4. Un procédé selon l'une quelconque des revendications précédentes, caractérisé en ce que le substrat (1) est composé de silicium.

5. Un procédé selon l'une quelconque des revendications précédentes, caractérisé en ce que le film protecteur (3) est composé d'au moins une substance choisie parmi l'oxynitrure de silicium, le nitrure de silicium, le dioxyde de silicium, les polyimides et les organosiloxannes.

6. Un procédé selon l'une quelconque des revendications précédentes, caractérisé en ce que le film protecteur (3) a une épaisseur d'environ $5 \cdot 10^{-3}$ $\mu m$ (50 Å) à environ 20 $\mu m$.

*Fig. 1*

*Fig. 2*

*Fig. 3*

| INFRARED SPECTRUM | RATING SYMBOL |
|---|---|
| | A |
| | B |
| | C |
| | D |

$1320 cm^{-1}$
$1080 cm^{-1}$